# EUROPÄISCHE PATENTSCHRIFT

(11) **EP 0 697 374 B1**
(45) Veröffentlichungstag und Bekanntmachung des Hinweises auf die Patenterteilung: **22.03.2000**
(21) Anmeldenummer: 94810469.0
(22) Anmeldetag: 15.08.1994
(51) Int. Cl.: C02F 1/32, B01F 5/06, B01J 19/12

(54) **Vorrichtung zum Behandeln von Fluiden mit UV-Strahlung**
Ultraviolet fluid treatment device
Appareil pour traitement de fluides par rayonnement U.V.

(43) Veröffentlichungstag der Anmeldung: 21.02.1996
(73) Patentinhaber: Sulzer Chemtech AG, 8404 Winterthur (CH)
(72) Erfinder: Oppenländer, Thomas Prof. Dr., D-78056 VS-Schwenningen (DE); Mathys, Peter, CH-8212 Neuhausen am Rheinfall (CH); Schneider, Gottlieb, CH-8472 Seuzach (CH)
(74) Vertreter: Heubeck, Bernhard

(56) Entgegenhaltungen:
- EP-A- 0 508 046

## Beschreibung

Die Erfindung betrifft eine Vorrichtung zum Behandeln von Fluiden mit UV-Strahlung gemäss Oberbegriff von Anspruch 1. Sie bezieht sich auch auf Anlagen mit solchen Vorrichtungen sowie auf Verwendungen solcher Vorrichtungen.

Aus der EP-A 0 254 111 ist ein Strahler bekannt, bei dem UV-Strahlung mittels Excimeren erzeugt wird. Es ist insbesondere ein Excimer-Strahler bekannt, der zwei koaxiale, zylindrische Quarzrohre umfasst, die miteinander gasdicht verbunden sind. Der Ringraum zwischen den Rohren ist der Entladungsraum, in dem ein Excimergas eingeschlossen ist. Ausserhalb des Entladungsraums befinden sich Elektroden, die mit einem Hochfrequenz-Generator (HF-Generator) verbunden sind. Aufgrund einer hochfrequenten Hochspannung induzieren die Elektroden im Entladungsraum Plasmaentladungen, durch die Excimermoleküle gebildet werden. Die Excimermoleküle zerfallen kurz nach ihrer Erzeugung wieder, wobei jeweils ein UV-Photon emittiert wird.

Excimergase sind Edelgase (Xenon, Krypton und Argon), Halogene (Iod, Brom, Chlor und Fluor) sowie Gemische von Edelgasen und Halogenen. Excimermoleküle sind elektronisch angeregte Molekülkomplexe (z.B. Xe₂* oder XeCl*), die in stillen elektrischen Entladungen gebildet werden können. Bei der Photonemission trennen sich die Atome wieder voneinander. Die Excimer-Strahler zeichnen sich durch schmalbandige Emissionsspektren aus (inkohärente, "quasi monochromatische" Strahlung). Abhängig vom Excimergas emittieren sie bei unterschiedlichen Wellenlängen im UV-Bereich des elektromagnetischen Spektrums. Infrarotstrahlung wird nicht erzeugt. Der Excimer-Strahler kann kontinuierlich oder gepulst (Pulsdauer beispielsweise 0.1 s) betrieben werden.

Bei einer besonderen Ausführungsform des Excimer-Strahlers ist das innere Rohr als Durchflussstrecke für das zu behandelnde Fluid (Gas oder Flüssigkeit) vorgesehen. Die innere Elektrode, die mit dem Fluid in Kontakt steht, ist als Drahtwendel ausgebildet; die äussere Elektrode umhüllt das doppelwandige Quarzrohr und wirkt als Reflektor für die UV-Strahlung, wodurch eine innenzentrierte Strahlungsgeometrie entsteht. Bei einer derartigen Durchfluss-Excimerlampe muss folgendes Problem beachtet werden:

Die UV-Photonen werden in der Regel, insbesondere bei der Behandlung von Flüssigkeiten, in einer schmalen Randzone des Fluidraums absorbiert. Wegen der geringen Eindringtiefe der Strahlung muss für eine gute Durchmischung des Fluids gesorgt werden, um die Effizienz der Photoreaktion zu beschleunigen und um Polymerisationsreaktionen an der Grenzfläche zwischen Fluid und den Strahlerinnenwänden zu verhindern. Bei der Behandlung einer Flüssigkeit mit der bekannten Vorrichtung ist dies durch Einleiten von Gasen gelöst worden. Eine andere Möglichkeit besteht darin, mit hohen Durchflussraten für eine turbulente Strömung zu sorgen.

Es ist Aufgabe der Erfindung, die bekannte Durchfluss-Excimerlampe in einer Weise weiterzubilden, dass die Bestrahlung auch mit einem laminar strömenden Fluid und ohne Einleiten von Gasen (beim Behandeln einer Flüssigkeit) mit gutem Wirkungsgrad durchführbar ist. Die Lösung dieser Aufgabe ergibt sich gemäss der Erfindung durch die im kennzeichnenden Teil des Anspruchs 1 genannte Massnahme.

Die abhängigen Ansprüche 2 bis 7 betreffen verschiedene Ausführungsformen des erfindungsgemässen UV-Excimer-Durchflussreaktors. Der unabhängige Anspruch 8 bezieht sich auf Anlagen mit mehreren Strahlern. Die Gegenstände der folgenden Ansprüche 9 bis 12 sind Verwendungen der erfindungsgemässen Vorrichtung.

Nachfolgend wird die Erfindung anhand von Zeichnungen erläutert. Es zeigen:
- Fig. 1: Eine Anlage mit einer Mehrzahl von Durchfluss-Excimerlampen,
- Fig. 2: einen erfindungsgemässen, aufgeschnittenen Strahler, in perspektivischer und ausschnittsweiser Ansicht,
- Fig. 3: den Querschnitt durch den erfindungsgemässen Strahler für eine erste Ausführungsform und
- Fig. 4: den Querschnitt für eine zweite Ausführungsform.

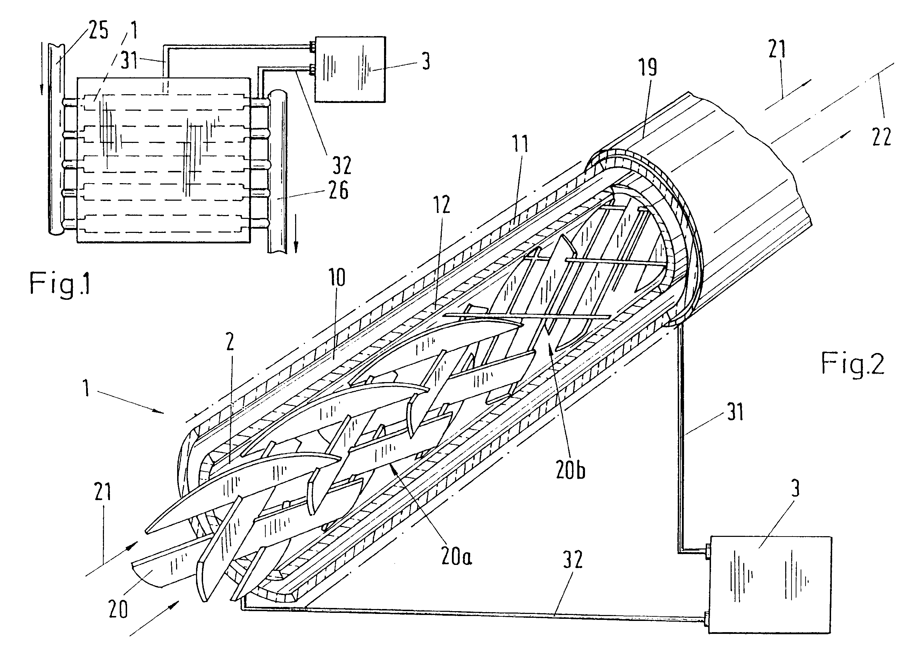

In Fig.1 ist eine modular aufgebaute Anlage dargestellt, bei der die Module fünf parallel angeordnete Durchfluss-Excimerlampen 1 sind. Die Module 1 sind an einen Verteiler 25 und einen Sammler 26 angeschlossen. Die Elektroden der Excimer-Strahler sind über Leitungen 31 und 32 an einen HF-Generator 3 angeschlossen. (In Fig.1 sind die Verbindungen 31, 32 nur zu einem Modul 1 dargestellt.) In anderen, nicht dargestellten Anlagen können Module auch in Serie zusammengeschaltet sein, wobei es vorteilhaft sein kann, wenn die Excimer-Strahler auf die Verwendung angepasst unterschiedliche Emissionswellenlängen aufweisen.

Die erfindungsgemässe Vorrichtung 1 in Fig.2 zeigt folgende Teile: Den mit einem Excimergas gefüllten Entladungsraum 10, der durch die Quarzrohre 11 und 12 gebildet wird; den als Durchlauf- und Behandlungsstrecke für das Fluid vorgesehenen Raum 2, der die als statischer Mischer ausgebildete Elektrode 20 (im folgenden statische Mischerelektrode genannt) enthält; und die als UV-Reflektor ausgebildete äussere Elektrode 19. Die Elektrode 19 ist über die Leitung 31 und die statische Mischerelektrode 20 über die Leitung 32 mit dem HF-Generator 3 verbunden. Die Pfeile 21 geben die Hauptströmungsrichtung des Fluids an und mit dem Bezugszeichen 22 ist die Längsachse der Vorrichtung 1 bezeichnet.

Ein statischer Mischer setzt sich aus einer Serie von axial angeordneten Mischelementen zusammen. Beim Mischer 20 der Fig.2, der beispielsweise aus der CH-A 642 564 bekannt ist, sind zwei Mischelemente, nämlich 20a und 20b, sichtbar. Ein solches Mischelement weist eine Struktur auf, die sich aus ineinandergreifenden, sich kreuzenden Stegen aufbaut, wobei die Stege zwei Gruppen von parallel ausgerichteten Strukturelementen bilden.

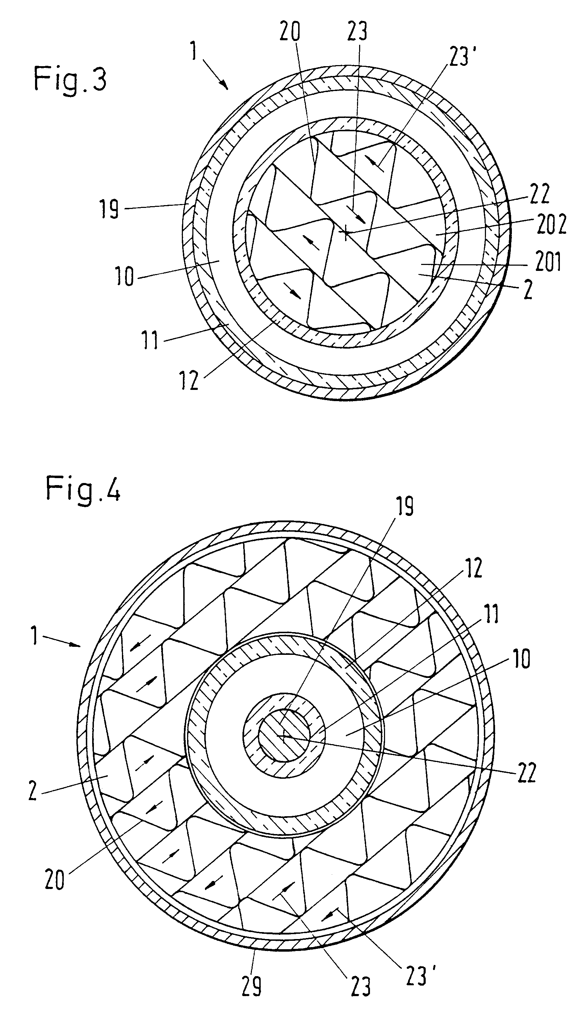

Die Fig.3 zeigt den Querschnitt durch einen erfindungsgemässen Strahler 1, der im wesentlichen gleich ist wie der Strahler der Fig.2. Der Unterschied ist durch die Struktur der statischen Mischerelektrode 20 gegeben: Ein Mischelement baut sich hier aus Lagen 201 und 202 auf, die jeweils aus einer gefalteten Lamelle gebildet sind. Aufgrund der Faltung ergeben sich Kanäle, die sich offen kreuzen. Die Pfeile 23 und 23' geben die Richtungen der Kanäle an, die mit der Richtung der Achse 22 einen Winkel einschliessen.

Das Ausführungsbeispiel der Fig.4 stellt eine invertierte Form des Ausführungsbeispiels der Fig.3 dar. Die Elektrode 19 ist ein zentral, auf der Achse 22 angeordneter Stab, der von einem ersten Quarzrohr 11 umhüllt ist. Zwischen diesem Rohr 11 und einem koaxialen Quarzrohr 12 befindet sich der Entladungsraum 10. Der Raum 2 für die Behandlung des Fluids ist ein den Entladungsraum 10 koaxial umgebender Ringraum. In diesem Raum 2 befindet sich die als statischer Mischer ausgebildete Elektrode 20, die eine Kreuzkanalstruktur wie beim Beispiel der Fig.3 aufweist. Selbstverständlich ist auch die Mischerkonstruktion der Fig.4 nur als Beispiel zu verstehen. Den äusseren Abschluss der Vorrichtung 1 bildet ein Rohr 29. Anstelle der stabförmigen Elektrode 19 kann beispielsweise auch eine wendelförmige vorgesehen sein.

Zwischen dem Rohr 29 und der statischen Mischerelektrode 20 (vgl. Fig.4) kann ein zweiter Entladungsspalt vorgesehen sein, wobei in diesem Fall das Rohr 29 als Elektrode ausgebildet ist. Bei einer derartigen Ausführungsform wird das Fluid von innen und von aussen bestrahlt. Ein Vorteil dieser Reaktorgeometrie ist auch die Möglichkeit einer "Doppelbestrahlung", nämlich in der Weise, dass die beiden Entladungsräume mit Excimergasen gefüllt werden, die unterschiedliche Emissionswellenlängen aufweisen.

Es ist auch eine Kombination der zwei in den Figuren 3 und 4 dargestellten Ausführungsformen denkbar: das zu behandelnde Fluid wird auf beiden Seiten des Entladungsraums 10 der UV-Strahlung ausgesetzt und die Elektroden 19 und 20 sind beide als statische Mischer ausgeführt.

Da die durch einen Excimer-Strahler emittierte Strahlung ein schmalbandiges Spektrum aufweist, kann die erfindungsgemässe Vorrichtung vorteilhafterweise für die Durchführung von wellenlängenselektiven Photoreaktionen verwendet werden. Bei dieser Verwendung bilden die Reaktanden selbst das zu behandelnde Fluid; oder die Reaktanden werden einem als Transportmittel dienenden Fluid zugemischt. Beispiele hierfür stellen die wellenlängenselektive Photolyse von 7-Dehydrocholesterin zur Produktion von Vitamin D₃ dar. Es ist bekannt, dass der Br₂*-Excimerstrahler (Wellenlänge = 289 nm) am besten geeignet ist. Ferner können technische photochemische Prozesse (z.B. Photochlorierung, Photobromierung, Photosulfochlorierung) mit der erfindungsgemässen Vorrichtung effizienter durchgeführt werden.

Weitere Verwendungen der erfindungsgemässen Vorrichtung betreffen die Wasser- und Abwassertechnik, bei welchen ein belastetes Wasser das zu behandelnde Fluid ist. Als Beispiele für die Behandlung können genannt werden: a) Entkeimung; b) Abbau von Schadstoffen, Farbstoffen oder Geruch.

Für die Bestrahlung von Fluiden geringer optischer Dichte, d.h. hoher Eindringtiefe der UV-Strahlung, eignet sich eine statische Mischerelektrode, die oder deren Oberfläche aus einem UV-reflektierenden Material besteht. Dadurch wird im Fluidstrom durch die Reflexion eine diffuse Strahlung auch in axialer Richtung erreicht.

Die statische Mischerelektrode 20 kann auch dazu genutzt werden, Gemische von Flüssigkeit, Gasblasen und/oder Feststoffpartikeln zu behandeln. Aufgrund der Mischwirkung wird eine Entmischung verhindert. So können beispielsweise bei der Behandlung von belastetem Wasser Luft- oder Sauerstoffblasen mitgeführt werden. Eine Sauerstoffanreicherung im Wasser kann den Abbauprozess von Schadstoffen erheblich beschleunigen. Auch lässt sich eine durch die UV-Strahlung hervorgerufene Ozonbildung erhalten.

Die erfindungsgemässe Vorrichtung kann auch für die Sterilisierung anderer Flüssigkeiten verwendet werden. Ferner können zum Durchführen von heterogen katalysierten Reaktionen dem zu behandelnden Fluid Partikel zugemischt werden, deren Oberflächen katalytisch wirksam sind. Es können auch Partikel zugemischt werden, deren Oberflächen aus einem UV-reflektierenden Material bestehen.

Für die Durchführung von heterogen katalysierten Reaktionen können auch die Oberflächen der statischen Mischerelektrode mit einem katalytisch wirksamen Stoff beschichtet werden. Zum Beispiel kann eine TiO₂-Beschichtung bei der Behandlung von belastetem Wasser verwendet werden. Ein katalytisch wirksames Material kann auch in taschenartigen Zwischenräumen der statischen Mischerelektrode enthalten sein, nämlich in der Weise, wie es aus der EP-A 0 396 650 bekannt ist.

## Patentansprüche

1. Vorrichtung zum Behandeln von Fluiden mit UV-Strahlung, mindestens einen langgestreckten zylindrischen Excimer-Strahler und einen als Durchlauf- und Behandlungsstrecke für das Fluid vorgesehenen Raum (2) umfassend, wobei der oder jeder Strahler einen Entladungsraum (10) sowie zwei Elektroden (19, 20) aufweist und eine der Elektroden (20) in dem für das Fluid vorgesehenen Raum (2) angeordnet ist,
dadurch gekennzeichnet, dass die Elektrode (20) im Fluidraum (2) als statischer Mischer für das Fluid (21), als sogenannte statische Mischerelektrode, ausgebildet ist.

2. Vorrichtung nach Anspruch 1, dadurch gekennzeichnet, dass der Ringraum eines doppelwandigen Quarzrohrs (11, 12) den oder einen Entladungsraum (10) bildet und die statische Mischerelektrode (20) in dem zentralen Raum (2) des Rohrs (11, 12) angeordnet ist.

3. Vorrichtung nach Anspruch 2, dadurch gekennzeichnet, dass die zweite Elektrode (19) das doppelwandige Quarzrohr (11, 12) umhüllt und als Reflektor für die UV-Strahlung wirkt.

4. Vorrichtung nach Anspruch 1, dadurch gekennzeichnet, dass die statische Mischerelektrode (20) in einem Ringraum angeordnet ist, der den oder einen Entladungsraum (10) koaxial umgibt.

5. Vorrichtung nach Anspruch 1, 2 oder 4, dadurch gekennzeichnet, dass die statische Mischerelektrode (20) in einem Ringraum zwischen zwei Entladungsräumen angeordnet ist.

6. Vorrichtung nach einem der Ansprüche 1 bis 5, dadurch gekennzeichnet, dass Teile der statischen Mischerelektrode (20) katalytisch wirksames Material aufweisen.

7. Vorrichtung nach einem der Ansprüche 1 bis 6, dadurch gekennzeichnet, dass die Oberflächen der statischen Mischerelektrode (20) UV-reflektierendes Material aufweisen.

8. Anlage mit einer Mehrzahl von Vorrichtungen gemäss einem der Ansprüche 1 bis 7, dadurch gekennzeichnet, dass die Vorrichtungen (1) als Module zusammengeschaltet sind, wobei die Excimer-Strahler der Module unterschiedliche Emissionswellenlängen aufweisen können.

9. Verwendung einer Vorrichtung gemäss einem der Ansprüche 1 bis 7 zum Durchführen von photochemischen Reaktionen mit Stoffen, insbesondere Reaktionsgasen, die dem Fluid zugemischt sind oder aus denen das Fluid zumindest teilweise selbst besteht.

10. Verwendung einer Vorrichtung gemäss einem der Ansprüche 1 bis 7 zum Sterilisieren von Flüssigkeiten oder zum Behandeln von belastetem Wasser, insbesondere zum Entkeimen oder für den Abbau von Schadstoffen, von Farbstoffen sowie von Geruch, mit oder ohne Zufuhr von Reaktionsgasen oder Oxidationsmitteln.

11. Verwendung nach Anspruch 10, dadurch gekennzeichnet, dass der Flüssigkeit oder dem Wasser Luft, Sauerstoff oder Ozon zugemischt wird.

12. Verwendung nach einem der Ansprüche 9 bis 11, dadurch gekennzeichnet, dass dem Fluid zusätzlich Partikel zugemischt werden, deren Oberflächen katalytisch wirksam sind und/oder deren Oberflächen aus einem UV-reflektierenden Material bestehen.

## Claims

1. Apparatus for treating fluids with ultraviolet radiation comprising at least one elongate cylindrical excimer radiator and at least one chamber (2) which is provided as a through-flow and treatment section for the fluid, with the or each radiator having a discharge volume (10) as well as two electrodes (19, 20) and with one of the electrodes (20) being arranged in the chamber (2) provided for the fluid, characterized in that the electrode (20) in the fluid chamber (2) is formed as a static mixer for the fluid (21) as a so-called static mixer electrode.

2. Apparatus in accordance with claim 1, characterized in that the ring space of a double-walled quartz tube (11, 12) forms the discharge space (10) or a discharge space and in that the static mixer electrode (20) is arranged in the central chamber (2) of the tube (11, 12).

3. Apparatus in accordance with claim 2, characterized in that the second electrode (19) sleeves the double-walled quartz tube (11, 12) and acts as a reflector for the ultraviolet radiation.

4. Apparatus in accordance with claim 1, characterized in that the static mixer electrode (20) is arranged in a ring space which coaxially surrounds the or a discharge space (10).

5. Apparatus in accordance with claim 1, 2 or 4, characterized in that the static mixer electrode (20) is arranged in a ring space between two discharge space.

6. Apparatus in accordance with one of the claims 1 to 5, characterized in that parts of the static mixer electrode (20) comprise catalytically active material.

7. Apparatus in accordance with one of the claims 1 to 6, characterized in that the surfaces of the static mixer electrodes (20) comprise ultraviolet reflecting material.

8. Plant comprising a plurality of apparatuses in accordance with one of the claims 1 to 7, characterized in that the apparatuses (1) are connected together as modules, wherein the excimer radiators of the modules can have different emission wavelengths.

9. Use of an apparatus in accordance with one of the claims 1 to 7 for performing photochemical reactions with materials, in particular with reaction gases which are admixed to the fluid or of which the fluid itself at least partially consists.

10. Use of an apparatus in accordance with one of the claims 1 to 7 for sterilizing liquids or for treating polluted water, in particular for sterilisation or for the breakdown of pollutants, of dyes, or of odours with or without the additional supply of reaction gases or oxidizing agents.

11. Use in accordance with claim 10, characterized in that air, oxygen or ozone is admixed to the liquid or to the water.

12. Use in accordance with one of the claims 9 to 11, characterized in that particles are additionally admixed to the fluid, the surfaces of which are catalytically active and/or the surfaces of which are made of an ultraviolet reflecting material.

## Revendications

1. Dispositif pour le traitement de fluides par rayonnement UV, comprenant au moins un radiateur excimer cylindrique oblong et une enceinte (2) prévue comme trajet de passage et de traitement pour le fluide, où le ou chaque radiateur présente une enceinte de décharge (10) ainsi que deux électrodes (19, 20) et où l'une des électrodes (20) est disposée dans l'enceinte (2) prévue pour le fluide,
caractérisé en ce que l'électrode (20) dans l'enceinte de fluide (2) est réalisée comme mélangeur statique pour le fluide (21), comme soi-disant électrode de mélange statique.

2. Dispositif selon la revendication 1, caractérisé en ce que l'enceinte annulaire d'un tube de quartz (11,12) à paroi double forme la ou une enceinte de décharge (10) et que l'électrode de mélange statique. (20) est disposée dans l'enceinte centrale (2) du tube (11,12).

3. Dispositif selon la revendication 2, caractérisé en ce que la deuxième électrode (19) enveloppe le tube de quartz (11,12) à paroi double et agit comme réflecteur du rayonnement UV.

4. Dispositif selon la revendication 1, caractérisé en ce que l'électrode de mélange statique (20) est disposée dans une enceinte annulaire qui entoure coaxialement la ou une enceinte de décharge (10).

5. Dispositif selon la revendication 1, 2 ou 4, caractérisé en ce que l'électrode de mélange statique (20) est disposée dans une enceinte annulaire entre deux enceintes de décharge.

6. Dispositif selon l'une des revendications 1 à 5, caractérisé en ce que des parties de l'électrode de mélange statique (20) présentent un matériau à effet catalytique.

7. Dispositif selon l'une des revendications 1 à 6, caractérisé en ce que les surfaces de l'électrode de mélange statique (20) présentent un matériau réfléchissant les UV.

8. Installation comportant une pluralité de dispositifs selon l'une des revendications 1 à 7, caractérisée en ce que les dispositifs (1) sont interconnectés comme modules, où les radiateurs eximère des modules peuvent présenter des longueurs d'ondes d'émission différentes.

9. Utilisation d'un dispositif selon l'une des revendications 1 à 7, pour exécuter des réactions photochimiques avec des matières, notamment des gaz de réaction qui sont ajoutés au fluide à partir desquels le fluide est constitué lui-même au moins partiellement.

10. Utilisation d'un dispositif selon l'une des revendications 1 à 7, pour stériliser des liquides ou pour traiter de l'eau contaminée, notamment pour dégerminer ou dégrader des matières nocives, des colorants ainsi que des odeurs, avec ou sans amenée de gaz de réaction ou de moyens d'oxydation.

11. Utilisation selon la revendication 10, caractérisée en ce qu'on ajoute au liquide ou à l'eau de l'air, de l'oxygène ou de l'ozone.

12. Utilisation selon l'une des revendications 9 à 11, caractérisée en ce qu'on ajoute au fluide en plus des particules dont les surfaces sont catalytiquement actives et/ou dont les surfaces sont constituées d'un matériau réfléchissant les UV.
